# EUROPÄISCHE PATENTANMELDUNG

(11) **EP 2 103 859 A1**
(43) Veröffentlichungstag der Anmeldung: **23.09.2009**
(21) Anmeldenummer: 09152645.9
(22) Anmeldetag: 12.02.2009
(51) Int. Cl.: F16L 37/23

(54) **Aus Kupplungsteilen bestehende Kupplung**

(30) Priorität: 18.02.2008 DE 102008009616
(71) Anmelder: Walther & Walther GmbH & Co. KG, 42781 Haan (DE)
(72) Erfinder:
(74) Vertreter: Müller, Enno

(57) **Zusammenfassung**

Eine aus als Vaterteil (2) und Mutterteil (3) ausgebildeten Kupplungsteilen bestehende Kupplung (1) mit einer zum Öffnen dienenden Verschiebehülse (27) und einer durch zum Entkuppeln in eine Freigabestellung bewegbare Formschlusselemente (23) gesicherte Kupplungsstellung, wobei beim Kuppeln eine Einhandbedienung ermöglicht ist und die Verschiebehülse (27) mittels eines in Längsrichtung relativ zu dem Mutterteil (3) beweglich angeordneten Verschiebeteils (30) im Zuge des Kuppelns in eine Formschlusselement-Absenkstellung zurückgeschoben wird, wobei weiter das beispielsweise als Kugel ausgebildete Verschiebeteil (30) im Zuge des Kuppelns zwischen einer ersten an dem Vaterteil (2) ausgebildeten Flach-Steuerfläche, die mit der Achse (x) einen ersten spitzen Winkel (α) einschließt, und mit einer an der Verschiebehülse (27) ausgebildeten zweiten Flach-Steuerfläche, die mit der Achse (x) einen zweiten spitzen Winkel (β) einschließt, gefangen ist. Um die bekannte Kupplung so auszugestalten und weiterzubilden, dass immer eine zuverlässige Handhabung ermöglicht ist, wird vorgeschlagen, dass bei in einem Winkelbereich von 40° bis 20° ausgebildeten Winkeln (α, β) der Winkel (β) um 1,5° bis 3,5° kleiner gewählt ist als der Winkel (α).

## Beschreibung

Die Erfindung betrifft eine aus als Vaterteil und Mutterteil ausgebildeten Kupplungsteilen bestehende Kupplung, mit einer zum Öffnen dienenden Verschlusshülse und einer durch zum Entkuppeln in eine Freigabestellung bewegbare Formschlusselemente gesicherte Kupplungsstellung, wobei beim Kuppeln eine Einhandbedienung ermöglicht ist und die Verschiebehülse mittels eines in Längsrichtung relativ zu dem Mutterteil beweglich angeordneten Verschiebeteils im Zuge des Kuppelns in eine Formschlusselement-Absenkstellung zurückgeschoben wird, wobei weiter das beispielsweise als Kugel ausgebildete Verschiebeteil im Zuge des Kuppelns zwischen einer ersten an dem Vaterteil ausgebildeten Flach-Steuerfläche, die mit der Einsteckachse x einen ersten spitzen Winkel Alpha einschließt, und mit einer an der Verschiebehülse ausgebildeten zweiten Flach-Steuerfläche, die mit der Achse x einen zweiten spitzen Winkel Beta einschließt, gefangen ist.

Kupplungen der in Rede stehenden Art sind als sogenannte Schnellverschlusskupplungen bekannt. Diese finden beispielsweise Anwendung zur Verbindung von Fluid durchströmten Leitungswegen. Das Vater-Kupplungsteil weist hierbei einen sich in Axialrichtung erstreckenden Dorn auf, der in axialer Steckzuordnung in eine entsprechende Axialöffnung des Mutter-Kupplungsteiles einsteckbar ist. Die die Kupplungsstellung sichernden Formschlusselemente sind bei dem bekannten Stand der Technik durch eine oder mehrere Haltekugeln erreicht, die in radialer Ausweichrichtung abgestützt sind. Durch Verlagerung der Verschiebehülse wird den Formschlusselementen ein Freiraum zum Ausweichen und somit zum Aufheben der Kupplungsstellung angeboten.

Eine Kupplung speziell wie eingangs vorausgesetzt ist aus der DE 30 23 377 A1 bekannt. Hiermit ist eine erleichterte Einhandbedienung im Zuge des Kuppelns der Kupplungsteile ermöglicht. Eine manuelle Schiebeverlagerung der Verschiebehülse zur Erlangung der Kupplungsstellung ist nicht nötig, wenngleich diese Bedienmöglichkeit weiterhin gegeben ist. Das in dem Mutterteil vorgesehene Verschiebeteil wird im Zuge des Kuppelns vom Vaterteil in Steckrichtung, das heißt in Ausrichtung der Kupplungsteilachsen verlagert, dies unter zumindest streckenabschnittsweiser Mitnahme der Verschiebehülse, zumindest so weit, dass eine Stellung erreicht ist, in der die die Kupplung erzielenden Formschlusselemente in eine Vaterteil-Freigabestellung verlagert werden können, so dass das Gegenformschlusselement seitens des Vaterteils an den abgesenkten mutterteilseitigen Formschlusselementen vorbeigeführt werden kann.

Diese Kupplungsgestaltung ist wegen ihres einfachen Einbaus und erleichterten Bedienmöglichkeit vorteilhaft. Jedoch hat sich in der Praxis herausgestellt, dass ein zuverlässiges Funktionieren nicht erreicht werden kann. Hierbei ist es erforderlich, dass in allen denkbaren Einbaustellungen und unter den verschiedensten Einbaubedingungen immer eine zuverlässige Betätigung erzielt werden kann.

Ausgehend von dem angegebenen Stand der Technik beschäftigt sich die Erfindung daher mit der Aufgabe, die bekannte Kupplung so auszugestalten und weiterzubilden, dass immer eine zuverlässige Handhabung ermöglicht ist.

Diese Aufgabe ist bevorzugt dadurch gelöst, dass bei in einem Winkelbereich von 40° bis 20° ausgebildeten Winkeln α, β der Winkel β 1,5° bis 3,5° kleiner ist als der Winkel α. Es hat sich gezeigt, dass bei Einhalten dieser Randbedingungen stets ein zuverlässiges Kuppeln ermöglicht ist. Hierbei ist weiter bevorzugt, dass der genannte Bereich, in dem der Winkel β kleiner ist, bei 2° bis 3° liegt. Auch die weiteren Zwischenbereiche, auch in 10°-Schritten, etwa 2,1° bis 3° oder 2° bis 2,9° und 2,1° bis 2,9° etc. sind hiermit in die Offenbarung eingeschlossen.

Wenn auch die genannte Bedingung bereits die zuverlässige Bedienbarkeit im üblichen Einsatzspektrum abdeckt, ist kombinativ oder alternativ aber auch bevorzugt, dass das von dem Verschiebeteil in Radialrichtung durchsetzte Mutterteil bezogen auf eine Größt-Abmessung A des Verschiebeteils eine Wandstärke aufweist, die etwa zwei Drittel der Abmessung A entspricht und dass das Verschiebeteil um ca. ein Sechstel A in Radialrichtung des Verschiebeteils über das Mutterteil vorstehen kann.

In Einsteckrichtung vor dem Schiebehülsenvorsprung ist bevorzugt eine Aufnahmevertiefung ausgebildet, derart, dass der Abstand zwischen einer größten radialen Erstreckung des Vaterteil-Vorsprungs und einer geringsten Erstreckung nach radial innen der Aufnahmevertiefung so groß ist, dass das Verschiebeteil bei Aufnahme in der Aufnahmevertiefung von dem Vaterteil-Vorsprung überlaufbar ist.

Auch ist bevorzugt, dass das Verschiebeteil in eine in der Verschiebehülse ausgebildete Aufnahmevertiefung, wenn es dort aufgenommen ist, bei in unbetätigter Stellung befindlicher Verschiebehülse, entsprechend einem Sechstel seiner Größt-Abmessung (im Falle der Kugel: seines Durchmessers) einliegt.

Auch ist bevorzugt, dass in axialer Verlängerung der Bewegungsbahn des Verschiebeteils kein Formschlusselement vorgesehen ist. Darüber hinaus ist bevorzugt, dass ein Formschlusselement sich praktisch nur in radialer Richtung bewegen kann.

Im Weiteren wird vollinhaltlich auf die Offenbarung der genannten DE 30 23 377 A1 Bezug genommen, auch zum Zwecke Merkmale dieser Vorveröffentlichung in Ansprüche vorliegender Anmeldung mit aufzunehmen.

Nachstehend ist die Erfindung anhand der beigefügten Zeichnung, welche lediglich ein Ausführungsbeispiel darstellt, näher erläutert. Es zeigt:
- Fig. 1: eine aus einem Vaterteil und einem Mutterteil bestehende Kupplung in perspektivischer Darstellung;
- Fig. 2: die Ansicht gemäß dem Pfeil II in Fig. 1;
- Fig. 3: den Längsschnitt gemäß der Linie III-III in Fig. 2, bei getrennten Kupplungsteilen ;
- Fig. 4: den Schnitt gemäß der Linie IV-IV in Fig. 3 durch das Mutterteil;
- Fig. 5: den Schnitt gemäß der Linie V-V in Fig. 3;

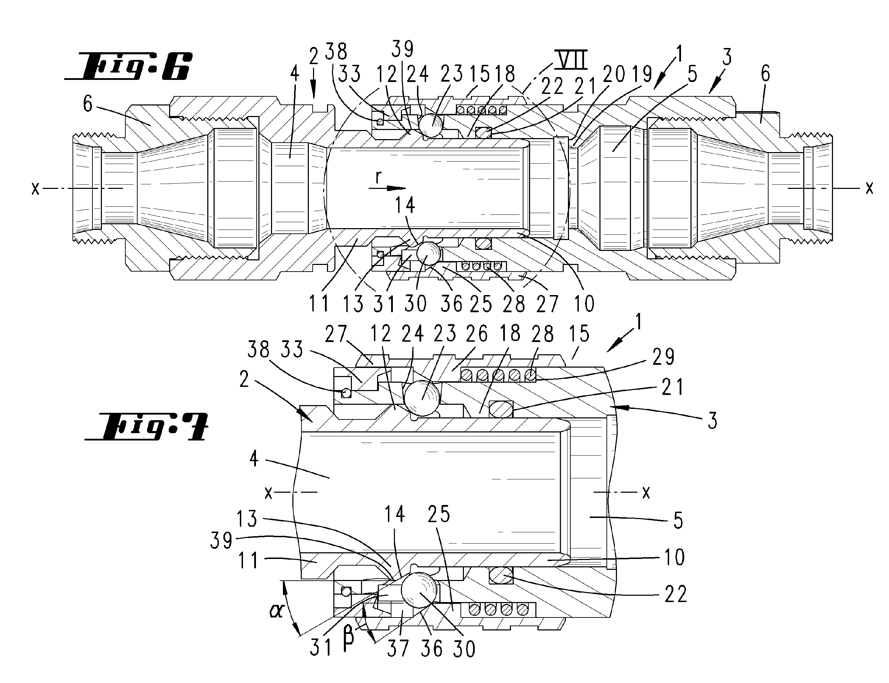

- Fig. 6: eine der Fig. 3 entsprechende Darstellung, jedoch eine Zwischenstellung im Zuge des Steckvorgangs von Vaterteil und Mutterteil betreffend;
- Fig. 7: die Herausvergrößerung des mit VII in Fig. 6 bezeichneten Bereichs;
- Fig. 8: eine Folgedarstellung der Fig. 6, bei weiterer Einsteckverlagerung des Vaterteils in das Mutterteil;
- Fig. 9: die Herausvergrößerung des mit IX bezeichneten Bereiches in Fig. 8;
- Fig. 10: eine Folgedarstellung der Fig. 8, die Kupplungsstellung betreffend;
- Fig. 11: die Herausvergrößerung des Bereiches XI in Fig. 10;
- Fig. 12: eine der Fig. 10 entsprechende Darstellung, jedoch nach Aufhebung der Kupplungsstellung durch Schieberückverlagerung einer Verschiebehülse;

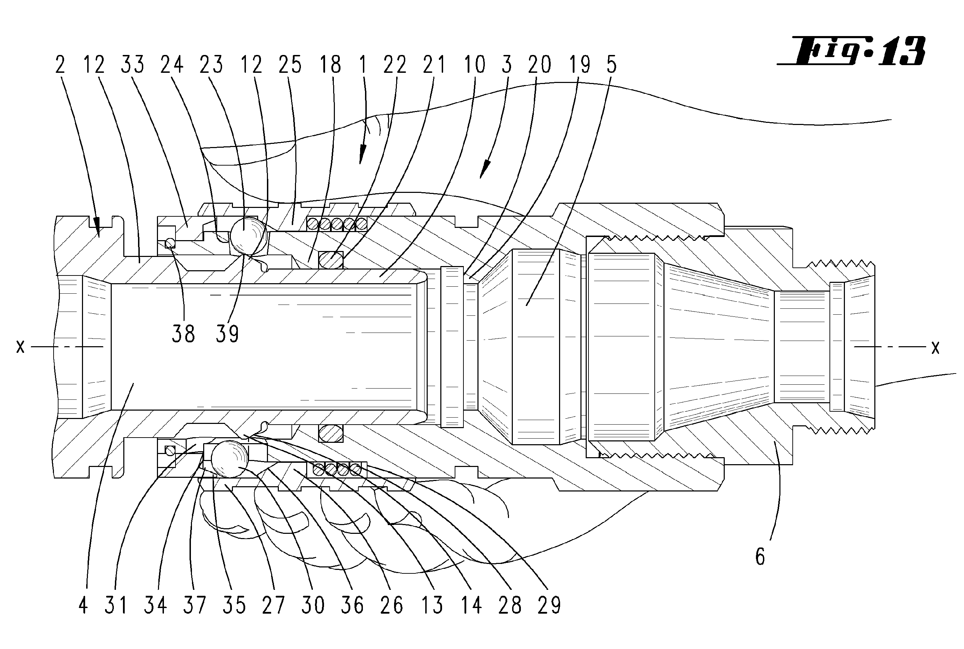

- Fig. 13: die Herausvergrößerung des Bereiches XIII in Fig. 12.

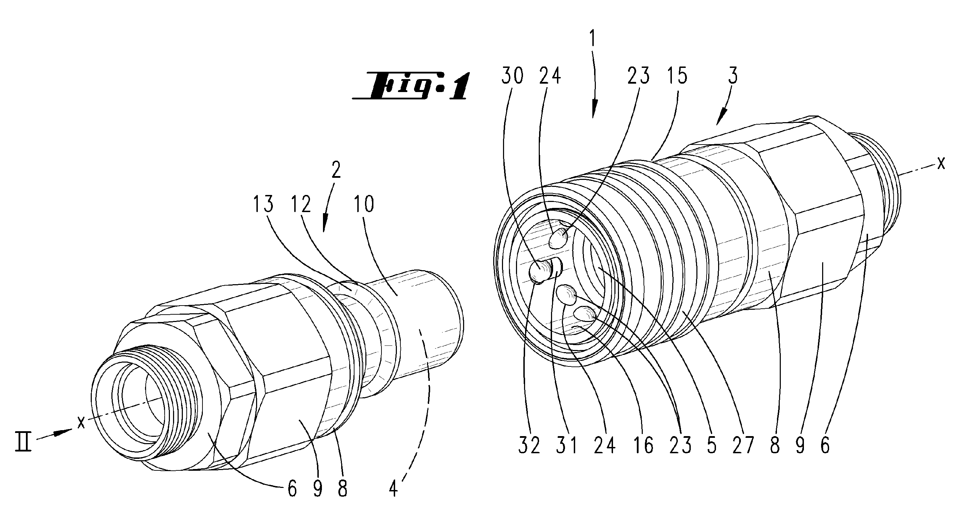

Dargestellt und beschrieben ist zunächst mit Bezug zur Fig. 1 eine Kupplung bestehend aus zwei Kupplungsteilen, nämlich einem Vaterteil 2 und einem Mutterteil 3. Die Kupplung 1 dient zur kuppelnden Verbindung von insbesondere Fluid durchsetzten Leitungen oder dgl. Hierzu sind weiter, wenngleich in den Zeichnungen nicht dargestellt, in der Kupplung 1 bzw. in den jeweiligen Kupplungsteilen noch ergänzende Ventileinbauten, wie sie aus dem Stand der Technik her bekannt sind, vorgesehen.

Zentral sind die Kupplungsteile 2 und 3 in Richtung der Achse x verlaufend von Strömungswegen 4, 5 durchsetzt. Letztere nehmen die nicht dargestellten Ventileinbauten auf.

Die den Steckzuordnungsenden der Kupplungsteile abgewandten Endabschnitte von Vaterteil 2 und Mutterteil 3 sind entweder zum unmittelbaren Anschluss eines Leitungsendes oder, wie weiter dargestellt, zum Anschluss eines Adapterteils 6 ausgebildet. Hierzu sind diese Enden unter radialer Erweiterung des durchschnittlichen Strömungsweg-Querschnittes mit einem Innengewinde 7 versehen. Der so geschaffene Anschlussabschnitt 8 ist mantelwandaußenseitig im Querschnitt als Sechskant gebildet, zum Ansetzen eines Maulschlüssels in entsprechender Maulweite. Der Sechskantabschnitt des Vaterteils 2 sowie des Mutterteils 3 ist mit dem Bezugszeichen 9 versehen.

Abgewandt dem Anschlussabschnitt 8 geht das Vaterteil 2 über in einen konzentrisch zur Achse x ausgerichteten, gleichfalls vom Strömungsweg 4 durchsetzten Hohl-Steckdorn 10. Der weist einen Außendurchmesser auf, der etwa dem halben Durchmesser des Vaterteils 2 im Bereich des Anschlussabschnitts 8 entspricht. In Längserstreckung betrachtet entspricht die Länge des Steckdorns 10 etwa dem 1,2- bis 1,3-fachen der in selber Richtung gemessenen Länge des gegenüber dem Steckdorn 10 durchmesservergrößerten Anschlussbereiches 8 des Vaterteiles 2.

Bei zunächst im Wesentlichen durchgehend über die Länge des Steckdorns 10 gleichbleibender Wandungsstärke ist der Wurzelbereich des Steckdorns 10 an dem Anschlussabschnitt 8 materialverstärkt. Dies konzentrisch umlaufend. Die Materialstärke in diesem verdickten Wurzelbereich 11 entspricht etwa dem zweifachen Stärkenmaß der allgemeinen Steckdornwandung. Die axiale Erstreckungslänge des Wurzelbereiches 11 entspricht etwa der zweifachen Wandungsstärke im Wurzelbereich 11.

Mit axialem Abstand zum Wurzelbereich 11 trägt der Steckdorn 10 weiter einen materialeinheitlich, einstückig aus der Steckdornwandung ausgeformten Vorsprung 12. Dieser ist in dem dargestellten Ausführungsbeispiel als umlaufende Rippe 13 gebildet, mit einem Außendurchmesser, der dem Außendurchmesser des Wurzelbereiches 11 entspricht. Der Abstand zwischen Rippe 13 und Wurzelbereich 11 entspricht etwa dem axialen Erstreckungsmaß des Wurzelbereiches 11.

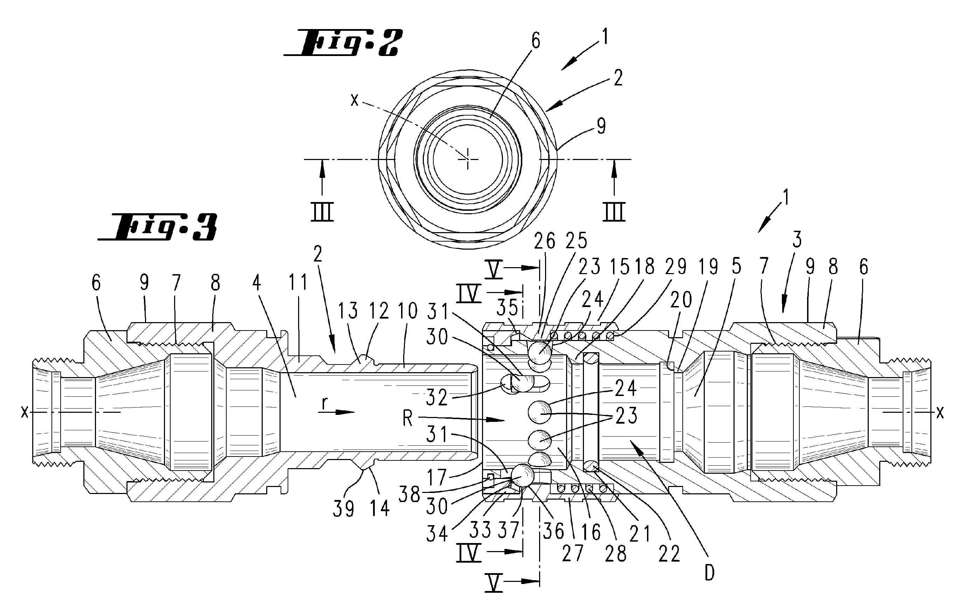

Die im Querschnitt beispielsweise gemäß Fig. 3 aufeinander zu weisenden Flanken von Wurzelbereich 11 und Rippe 13 schließen in dem dargestellten Ausführungsbeispiel jeweils einen Winkel von etwa 45° zu einer Achsparallelen ein. Dies weiter in der Art, dass die entsprechende Flanke des Wurzelbereiches 11 entgegen einer Einschieberichtung r ansteigt, während die dieser zugewandten Flanke der Rippe 13 bei gleicher Blickrichtung abfällt. Es ergibt sich hieraus ein in Axialrichtung durch den Wurzelbereich 11 und die Rippe 13 begrenztes Tal mit einer durch die Mantelaußenwandung des Steckdornes 10 definierten Talsohle.

Auch zugewandt dem freien Einsteckende des Steckdorns 10 ist der Vorsprung 12 bzw. die Rippe 13 mit einer Abflachung 14 versehen. Diese schließt in dem dargestellten Ausführungsbeispiel einen Ansteigwinkel Alpha zu einer Achsparallelen von etwa 30° ein. Gleich der Abflachung im Wurzelbereich 11 steigt auch diese Abflachung 14 entgegen der Einschieberichtung r an. Radial außen weist der Vorsprung 12 einen achsparallelen Abschnitt 39 auf.

Das Mutterteil 3 ist abgewandt dem das Innengewinde 7 aufweisenden Anschlussabschnitt 8 mit einem Kupplungsabschnitt 15 versehen. Dieser weist zunächst einen axial ausgerichteten, im Wesentlichen durch den Strömungsweg 5 ausgebildeten, zentralen Aufnahmeabschnitt 16 auf. Dieser ist über die gesamte axiale Erstreckungslänge im Querschnitt kreisrund, dies weiter unter in Erstreckungslänge betrachteter stufenartiger Ausbildung.

Der Aufnahmeabschnitt 16 ist weiter in Längserstreckung betrachtet unterteilt in zwei Zonen, so ausgehend von der Aufnahmeabschnittöffnung 17 in eine Rastverbindungszone R und eine hieran anschließende Dicht- und Zentrierzone D.

Die beiden Zonen R und D sind im Hinblick auf ihre Durchmesser unterschiedlich gestaltet. So ist die Rastverbindungszone R mit einem freien Innendurchmesser versehen, der im Wesentlichen an den Außendurchmesser des vaterteilseitigen Vorsprungs 12 b bzw. Rippe 13 und weiter auch dem Außendurchmesser des Wurzelbereiches 11 angepasst ist. Der Innendurchmesser der Dicht-/Zentrierzone D ist angepasst an den Außendurchmesser des vaterteilseitigen Steckdorns 10 im Bereich seiner allgemeinen Wandungsstärke, das heißt außerhalb des Rippen- bzw. Wurzelbereiches, weiter insbesondere im Steckdornbereich zwischen Rippe 13 und freiem Ende.

Der Stufenübergang zwischen den Zonen R und D ist, wie im Querschnitt gemäß Fig. 3 zu erkennen, mit einer Abflachung versehen. Dieser stufenförmige Übergang ist mit dem Bezugszeichen 18 versehen.

Die axiale Tiefe des sich aus den beiden Zonen R und D zusammensetzenden Aufnahmeabschnitts 16 entspricht der freien axialen Länge des vaterteilseitigen Steckdorns 10. Endseitig des Aufnahmeabschnitts 16 ist durch eine nach radial innen einragende, umlaufende Rippe 19 ein Anschlag 20 für die freie Stirnrandkante des vaterteilseitigen Steckdorns 10 geschaffen.

Zugeordnet der Dicht-/Zentrierzone D ist mit axialem Abstand zur Übergangsstufe 18 eine, in einer Radialnut 21 einliegende Ringdichtung 22 vorgesehen.

In einer parallel zur Aufnahmeöffnungsebene verlaufenden und zur Übergangsstufe 18 hin orientieren Rastebene sind in der Rastverbindungszone R mehrere über den Umfang gleichmäßig verteilt angeordnete Formschlusselemente 23 vorgesehen. Diese sind als Verriegelungskugeln gestaltet, die in konisch nach radial außen sich erweiternden Bohrungen 24 einliegen. Diese Bohrungen 24 durchsetzen den die Rastverbindungszone R umfassenden Wandungsbereich des Mutterteils 3. Die kugelförmigen Formschlusselemente 23 ragen in einer Grundausrichtung gemäß der Darstellung in Fig. 3 etwa ein Drittel ihres Durchmessers A in den Freiraum der Rastverbindungszone R ein. Die Wandstärke des Mutterteils beträgt in diesem Bereich etwa zwei Drittel des Maßes A. Bei zentrischer Anordnung des kugelförmigen Formschlussteils bezüglich des Mutterteils 3 ergibt also beidseitig ein Überstand der etwa ein Sechstel des Maßes A entspricht. Es kann auch vorgesehen sein, dass das maximale Überstehen auf ein Sechstel des Maßes A begrenzt ist.

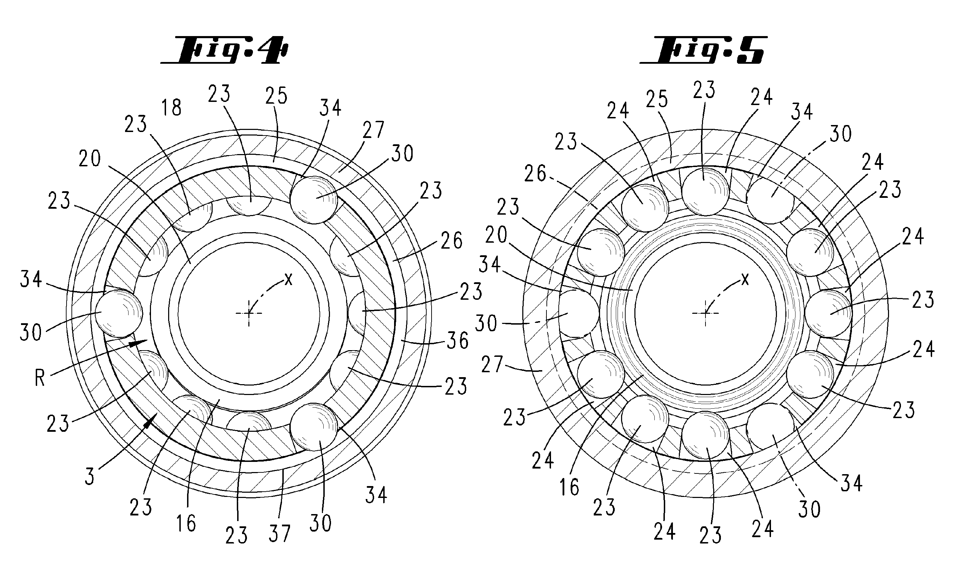

Es sind in dem dargestellten Ausführungsbeispiel in einem Querschnitt gemäß Fig. 5 betrachtet neun solcher Formschlusselemente 23 vorgesehen, wobei zwei in Umfangsrichtung benachbarte Formschlusselemente 23 einen Winkel von 30° zueinander einschließen. In Umfangsrichtung betrachtet alle 120° ist eine Lücke belassen. Dort ist entsprechend kein Formschlusselement 23 und keine Bohrung 24 vorgesehen. Hieraus resultieren in Umfangsrichtung drei Rastabschnitte mit jeweils drei Formschlusselementen 23.

Die Formschlusselemente 23 sind zur rasthalternden Festlegung des einzuschiebenden Vaterteils 2 nach radial innen belastet. Dies ist erreicht durch einen diese radial außen belastenden Vorsprung 25 in Form einer umlaufenden Rippe 26. Diese weist einen an den Außendurchmesser des Mutterteils 3 im Bereich der Bohrungen 24 angepassten Inndurchmesser auf und ist an einer in Axialrichtung der Kupplung 1 schiebeverlagerbaren Verschiebehülse 27 wandungsinnenseitig ausgeformt. Diese Verschiebehülse 27 ist in Richtung auf die Aufnahmeabschnittsöffnung 17 über eine Druckfeder 28 belastet. Letztere stützt sich einerends an einer endseitig von der Verschiebehülse 27 überfangenen Radialstufe 29 des Mutterteils 3 und anderendig an der Rippe 26 der Hülse 27 ab.

Die Schiebeverlagerung der Hülse 27 ist anschlagbegrenzt. So ist in einer unbeeinflussten, das heißt allein über die Druckfeder 28 belasteten Stellung der Verschiebehülse 27 die angeordnete Rippe 26 in radialer Zuordnung zu den Formschlusselementen 23 verbracht, derart, dass Letztere an einem Ausweichen nach radial außen gehindert sind. Dies wird erst dann ermöglicht, wenn die Verschiebehülse 27 in Axialrichtung entgegen der Federkraft der Druckfeder 28 rückverlagert wird, wobei die Rippe 26 den Bereich der Formschlusselemente 23 verlässt und ein radialer Ausweichraum für die Formschlusselemente 23 positioniert wird.

Dieser Vorgang der Schieberückverlagerung der Verschiebehülse 27 erfolgt insbesondere zum Lösen der Kupplungsverbindung von Hand. Die Schiebeverlagerung der Hülse 27 wird jedoch gemäß vorgeschlagener Erfindung auch im Zuge des Steckvorganges von Vaterteil und Mutterteil 3 erreicht, dies ohne weiteren Eingriff durch den Benutzer allein durch die Einsteckbewegung.

Hierzu sind in Einschieberichtung r vorgelagert der Rastebene, so weiter vorgelagert den Formschlusselementen 23 in der Rastverbindungszone R Verschiebeteile 30 vorgesehen. Diese wirken im Zuge des Einsteckvorganges beaufschlagt über das Vaterteil 2 schiebeverlagernd auf die Verschiebehülse 27 ein.

Als Verschiebeteile 30 sind gleichfalls Kugeln vorgesehen, weiter Kugeln gleicher Größe wie die die Formschlusselemente 23 bildenden Verriegelungskugeln. Diese Verschiebeteile 30 liegen in Achsrichtung der Kupplung 1 ausgerichteten Langlöchern 31 ein, welche die die Rastverbindungszone R umfassende Mantelwandung des Mutterteils 3 in Radialrichtung durchsetzen.

In dem dargestellten Ausführungsbeispiel sind über den Umfang gleichmäßig verteilt drei Verschiebeteile 30 und entsprechend drei Langlöcher 31 vorgesehen. Die Langlöcher 31 sind hierbei so positioniert, dass in axialer Verlängerung der Bewegungsbahn der Verschiebeteile 30 in den Langlöchern 31 kein Formschlusselement 23 vorgesehen ist. So erstrecken sich die Langlöcher 31 weiter ausgehend von der die Formschlusselemente 23 aufnehmenden Rastebene entgegen der Einschiebrichtung r in Richtung auf die Aufnahmeabschnittöffnung 17. Die lichte Weite eines jeden Langloches 31 quer zur Längsausrichtung ist kleiner gewählt als der Kugeldurchmesser eines einliegenden Verschiebeteils 30. So ist weiter ein Maß gewählt, welches ein kalottenartiges Einragen eines Teilabschnitts des Verschiebeteils 30 in den Aufnahmeabschnitt 16 erlaubt, so weiter mit einem Maß, welches etwa einem Sechstel des Durchmessers des Verschiebeteils 30 entspricht.

Das der Aufnahmeabschnittöffnung 17 zugewandte und zu dieser Öffnung 17 beabstandete Ende jedes Langloches 31 ist zu einer Einliegeöffnung 32 vergrößert. Diese weist im Grundriss eine kreisrunde Kontur auf, mit einem Durchmesser, der dem Durchmesser eines einzusetzenden Verschiebeteils 30 entspricht bzw. leicht größer ist um das frei Einlegen zu ermöglichen. Diese Einliegeöffnung 32 dient in erster Linie der Bestückung der Langlöcher 31 mit den Verschiebeteilen 30 im Zuge der Montage.

Im betriebsbereiten Zustand, wie auch in den Zeichnungen dargestellt, sind die Verschiebeteile 30 durch ein Blockadeteil 33 am Erreichen der jeweiligen Einliegeöffnung 32 gehindert. Dieses Blockadeteil 33 ist ringförmig gestaltet und stirnseitig von der der Aufnahmeabschnittöffnung 17 zugeordneten Öffnungsebene her in einen zwischen einer abgestuften Mantelwandung des Mutterteils 3 und der Innenwandung der übergreifenden Verschiebehülse 27 eingeschoben und durch einen Ring 38 fixiert. Dieses Blockadeteil 33 kann bei einer konkreten Ausführungsform beispielsweise durch einen federnden Sicherungsring gebildet sein. Abgewandt der freien Stirnfläche des Blockadeteils 33 formt dieses zugeordnet den Langlöchern 31 eine Abstützschulter 34 für die einliegenden Verschiebeteile 30. Darüber hinaus bietet das Blockadeteil 33 mittels einer sich in Axialrichtung an der Abstützschulter 34 anschließenden Ringschulter 35 einen Anschlag für die Verschiebehülse 27 in Federbeaufschlagungsrichtung.

Die kugelförmigen Verschiebeteile 30 sind in einer unbelasteten Grundstellung gemäß der Darstellung in Fig. 3 rückwärtig, das heißt radial von außen abgestützt zum partiellen Eingriff in den Aufnahmeabschnitt 16. Auch hierzu dient der Vorsprung 25 bzw. die Rippe 26 der Verschiebehülse 27. Hier jedoch über eine der Aufnahmeabschnittöffnung 17 zugewandte Abflachung 36, die in Einsteckrichtung r unter Einschluss eines Winkels Beta von 30° zu einer Achsparallelen ansteigend verläuft. Über diese Abflachung 36 wirkt die Rippe 26 der Verschiebehülse 27 bedingt durch die rückwärtige Federbeaufschlagung keilartig auf die kugelförmigen Verschiebeteile 30 ein, zur Belastung derselben nach radial innen.

Hinsichtlich des bereits weiter vorne beschriebenen Winkels α und des vorstehend beschriebenen Winkels β ist vorgesehen, dass die Beziehung eingehalten ist, dass der Winkel β 1, 5° bis 3,5° kleiner gewählt ist als der Winkel α. Dies bezogen auf einen Winkelbereich für die Winkel α und β von 40° bis 20°. Eingeschlossen ist also noch der Extremfall, dass der Winkel β 40° beträgt, dann beträgt der Winkel α bis 43,5°. Andererseits kann der Winkel β bis zu 20° (nur) beragen, dann beträgt der Winkel α 21,5° bis hin zu 23,5°. Bevorzugt ist jedoch der engere Bereich von 38° bis 20° und weiter bevorzugt der engere Bereich von 28° bis 20°, wobei nach bislang vorliegenden Erkenntnissen im Bereich von 30° bis 26° ein Optimum erreicht ist. In die Offenbarung der Winkelbereiche sind auch alle Winkel in Zehntel-Schritten mit eingeschlossen.

Axial begrenzt durch die rippenseitige Abflachung 36 und die Abstützschulter 34 des Blockadeteiles 33 ergibt sich eine umlaufende Aufnahmevertiefung 37. Diese ist in der unbelasteten Grundstellung gemäß Fig. 3 in Axialrichtung betrachtet so bemessen, dass die Verschiebeteile 30 nicht nach radial außen ausweichen können.

Zum Kuppeln der beiden Kupplungsteile (Vaterteil 2 und Mutterteil 3) wird das Vaterteil 2 mit dessen Steckdorn 10 in Axialrichtung in den Aufnahmeabschnitt 16 des Mutterteils 3 eingeschoben. Über den Steckdornabschnitt zwischen freiem Ende und Rippe 13 erfährt das einzuschiebende Vaterteil 2 in der Dicht-/Zentrierungszone D des Mutterteils 3 eine exakte koaxiale Ausrichtung.

Die in die Rastverbindungszone R eingeführte Rippe 13 des Vaterteils 2 tritt im Zuge des Einschiebens mit der in Einschieberichtung weisenden Abflachung 14 gegen die nach radial innen über die Mantelinnenwandung des Mutterteils 3 in den Aufnahmeabschnitt 16 einragenden kugelförmigen Verschiebeteile 30. Durch die radial rückwärtige Abstützung derselben gegen die parallel zur vaterteilseitigen Abflachung 14 ausgerichteten Abflachung 36 der Verschiebehülse 27 sind die Verschiebeteile 30 zunächst an einem radialen Auswandern nach außen in Richtung auf die Aufnahmevertiefung 37 gehindert, was weiter eine Zwangsschleppmitnahme der Verschiebehülse 27 über die Verschiebeteile 30 und die hülsenseitige Rippe 26 zur Folge hat. Dies entgegen der Wirkung der Druckfeder 28.

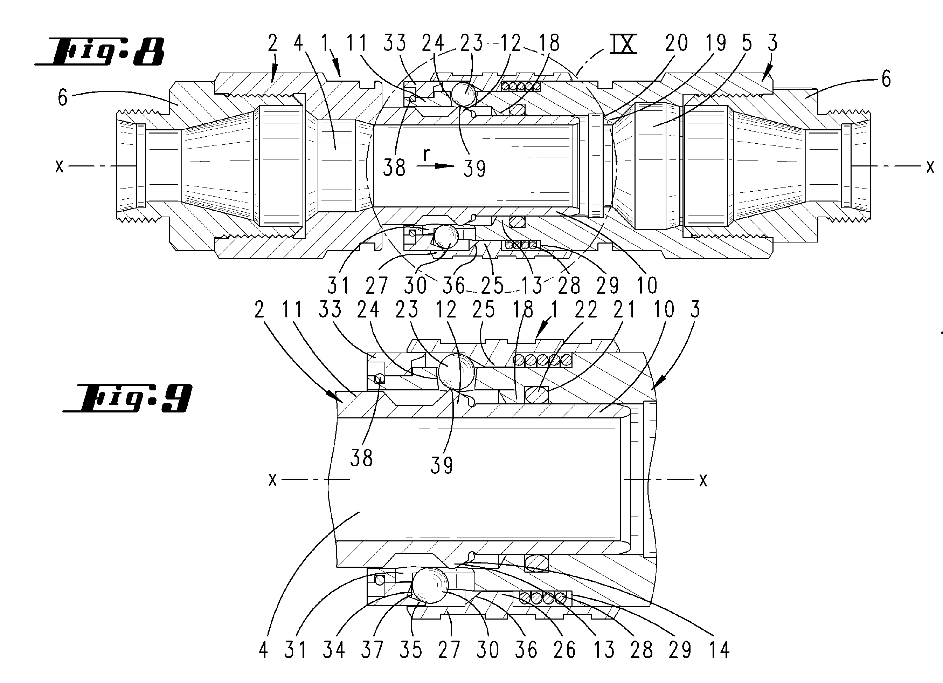

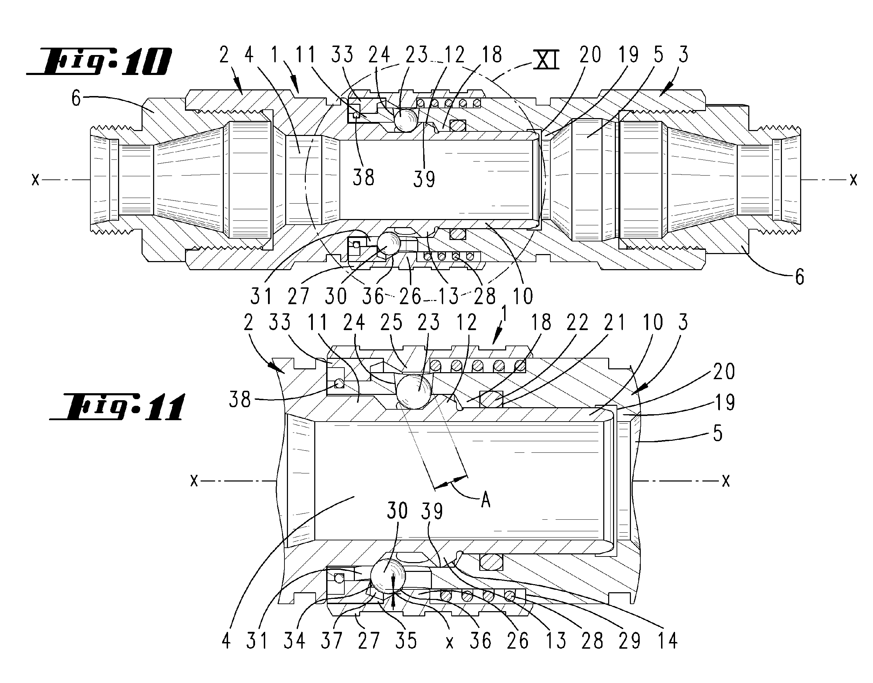

Durch die zwangsweise Verlagerung der Verschiebehülse 27 wird der sich in einem Ringspalt zwischen Mutterteil 3 und Verschiebehülse 27 sich einstellende Ausweichraum für die Formschlusselemente 23 in radialer Ausrichtung zu diesen Elementen verbracht. Zudem wird im Zuge der zwangsläufigen Hülsenverlagerung auch die Aufnahmevertiefung 37 zwischen Blockadeteil 33 und hülsenseitiger Rippe 26 in Axialrichtung vergrößert, so dass auch die kugelförmigen Verschiebeteile 30 im Zuge des weiteren Einschiebvorganges nach radial außen ausweichen können (vgl. Fig. 8 und 9). Durch Anschlagen am Ende eines Langloches werden die Verschiebeteile letztlich auch zu dieser Bewegung gezwungen. Bei nicht verlagerter Verschiebehülse 27 (vgl. etwa Fig. 11), liegt das Verschiebeteil 30 in der Aufnahmevertiefung 37 (gemessen von der radial innersten Höhe der Rippe 26 nach radial außen) mit einem Maß X ein, das einem Sechstel der Größt-Abmessung A des Verschiebeteiles 30 entspricht.

Durch weitere Schiebeverlagerung des Vaterteils 2 bis zum Anschlagen des freien Steckdornendes gegen den Anschlag 20 des Mutterteils 3 überlaufen die Vorsprünge 12 bzw. die umlaufende Rippe 13 des Steckdorns 10 sowohl die Formschlusselemente 23 als auch die Verschiebeteile 30, wonach die gespeicherte Federkraft der Druckfeder 28 zur selbsttätigen Rückverlagerung der Verschiebehülse 27 in die Grundstellung zurück freigegeben wird. Die von der vaterteilseitigen Rippe 13 überlaufenen Formschlusselemente 23 liegen nunmehr radial nach außen abgestützt durch die verschiebehülsenseitige Rippe 26 sperrend hinter der vaterteilseitigen Rippe 13, womit die Kupplungsverbindung rastgesichert ist.

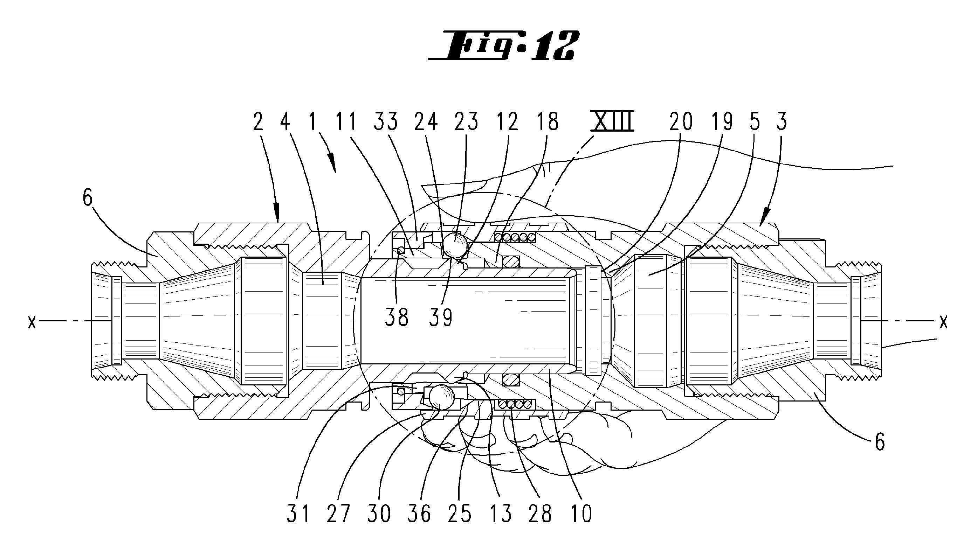

Über die hülsenseitige Abflachung 36 der Rippe 26 sind im Zuge der selbsttätigen, federunterstützten Rückverlagerung der Verschiebehülse 27 auch die Verschiebeteile 30 einliegend in ihren Langlöchern 31 in ihre Grundstellung zurück verbracht (vgl. Fig. 12).

Sowohl die Formschlusselemente 23 als auch die ebenenversetzt hierzu ausgerichteten Verschiebeteile 30 greifen in der Rastverbindungsstellung gemäß den Darstellungen in den Fig. 10 und 11 in das zwischen vaterteilseitiger Rippe 13 und Wurzelbereich 11 belassene Tal.

Wie weiter insbesondere aus den Schnittdarstellungen in den Fig. 4 und 5 zu erkennen, sind die Langlöcher 31 wie auch die, die Formschlusselemente 23 aufnehmenden Bohrungen 24 im Querschnitt sich nach radial außen erweiternd ausgebildet, um so eine Leichtgängigkeit bei der zwangsweisen Radialverlagerung der kugelförmigen Verschiebeteile 30 und Formschlusselemente 23 sicherzustellen.

Das Verschiebeteil kann, wie hier auch beschrieben, in einfachster Ausgestaltung eine Kugel sein, weiter beispielsweise gleichgestaltet einer, ein Formschlusselement bildenden Verriegelungskugel. Weiter kann das Verschiebeteil auch in Form von Walzen, insbesondere stiftartigen Walzen, darüber hinaus auch in Form von Segmenten gebildet sein. Weiter alternativ besteht auch die Möglichkeit, das Verschiebeteil als federgelagerten, insbesondere in Radialrichtung federgelagerten Stift auszubilden, dies weiter gegebenenfalls unter teleskopartiger Ausgestaltung zweier den Stift formende Hohlteile. Auch kann das Verschiebeteil als Rolle ausgebildet sein, so weiter tonnenförmig mit definierten Schrägen in den Endbereichen. Die Schräge schließt hierbei einen spitzen Winkel zur Kupplungslängsachse ein, so beispielsweise ein Winkel von 15°. Zudem kann in einer weiteren alternativen Ausgestaltung das Verschiebeteil bohnen- oder linsenartig gestaltet sein, darüber hinaus auch in Form von Spitzkugeln, die saturnringförmig gestaltet sind. Letztere weisen einen mittleren tellerartig umlaufenden Vorsprung auf.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

### BEZUGSZEICHENLISTE

- 1: Kupplung
- 2: Vaterteil
- 3: Mutterteil
- 4: Strömungsweg
- 5: Strömungsweg
- 6: Adapterteil
- 7: Innengewinde
- 8: Anschlussabschnitt
- 9: Sechskantabschnitt
- 10: Steckdorn
- 11: Wurzelbereich
- 12: Vorsprung
- 13: Rippe
- 14: Abflachung
- 15: Kupplungsabschnitt
- 16: Aufnahmeabschnitt
- 17: Aufnahmeabschnittöffnung
- 18: Stufenübergang
- 19: Rippe
- 20: Anschlag
- 21: Nut
- 22: Ringdichtung
- 23: Formschlusselemente
- 24: Bohrungen
- 25: Vorsprung
- 26: Rippe
- 27: Verschiebehülse
- 28: Druckfeder
- 29: Ringstufe
- 30: Verschiebeteile
- 31: Langlöcher
- 32: Einliegeöffnung
- 33: Blockadeteil
- 34: Abstützschulter
- 35: Ringschulter
- 36: Abflachung
- 37: Aufnahmevertiefung
- 38: Ring
- 39: Abschnitt

- x: Achse
- R: Rastverbindungszone
- D: Dicht-/Zentrierzone
- α: Ansteigwinkel
- β: Ansteigwinkel

## Patentansprüche

1. Aus als Vaterteil (2) und Mutterteil (3) ausgebildeten Kupplungsteilen bestehende Kupplung (1) mit einer zum Öffnen dienenden Verschiebehülse (27) und einer durch zum Entkuppeln in eine Freigabestellung bewegbare Formschlusselemente (23) gesicherte Kupplungsstellung, wobei beim Kuppeln eine Einhandbedienung ermöglicht ist und die Verschiebehülse (27) mittels eines in Längsrichtung relativ zu dem Mutterteil (3) beweglich angeordneten Verschiebeteils (30) im Zuge des Kuppelns in eine Formschlusselement-Absenkstellung zurückgeschoben wird, wobei weiter das beispielsweise als Kugel ausgebildete Verschiebeteil (30) im Zuge des Kuppelns zwischen einer ersten an dem Vaterteil (2) ausgebildeten Flach-Steuerfläche, die mit der Achse (x) einen ersten spitzen Winkel (α) einschließt, und mit einer an der Verschiebehülse (27) ausgebildeten zweiten Flach-Steuerfläche, die mit der Achse (x) einen zweiten spitzen Winkel (β) einschließt, gefangen ist, **dadurch gekennzeichnet, dass** bei in einem Winkelbereich von 40° bis 20° ausgebildeten Winkeln (α, β) der Winkel (β) um 1,5° bis 3,5° kleiner gewählt ist als der Winkel (α).

2. Kupplung nach Anspruch 1 oder insbesondere danach, **dadurch gekennzeichnet, dass** das Verschiebeteil (30) das Mutterteil (3) in Radialrichtung durchsetzt, wobei bezogen auf eine Größt-Abmessung (A) des Verschiebeteils (30) eine Wandstärke des Mutterteils (3) im Bereich des Verschiebeteils ca. zwei Drittel (A) entspricht.

3. Kupplung nach einem der vorhergehenden Ansprüche oder insbesondere danach, **dadurch gekennzeichnet, dass** in Einsteckrichtung (r) vor dem Schiebehülsen-Vorsprung (25) eine Aufnahmevertiefung (37) ausgebildet ist, derart, dass der Abstand zwischen einer größten radialen Erstreckung des Vaterteil-Vorsprungs (12) und einer geringsten Erstreckung nach radial innen der Aufnahmevertiefung (37) so groß ist, dass das Verschiebeteil (30) bei Aufnahme in der Aufnahmevertiefung (37) von dem Vaterteil-Vorsprung (12) überlaufbar ist.

4. Kupplung nach einem der vorhergehenden Ansprüche oder insbesondere danach, **dadurch gekennzeichnet, dass** das Langloch (31) eine vergrößerte Einliegeöffnung (32) aufweist.

5. Kupplung nach einem der vorhergehenden Ansprüche oder insbesondere danach, **dadurch gekennzeichnet, dass** das Verschiebeteil (30) am Erreichen der Einliegeöffnung (32) durch ein Blockadeteil (33) gehindert ist.

6. Kupplung nach einem der vorhergehenden Ansprüche oder insbesondere danach, **dadurch gekennzeichnet, dass** in axialer Verlängerung der Bewegungsbahn eines Verschiebeteils (30) kein Formschlusselement (23) vorgesehen ist.

7. Kupplung nach einem der vorhergehenden Ansprüche oder insbesondere danach, **dadurch gekennzeichnet, dass** ein Formschlusselement (23) sich praktisch nur in radialer Richtung bewegen kann.

8. Kupplung nach einem der vorhergehenden Ansprüche oder insbesondere danach, **dadurch gekennzeichnet, dass** ein Verschiebeteil (30) in eine in der Verschiebehülse (27) ausgebildete Aufnahmevertiefung (37), wenn es dort aufgenommen ist, entsprechend ein Sechstel seiner Größt-Abmessung (A) einliegt.
